# EUROPEAN PATENT APPLICATION

(11) **EP 1 634 746 A1**
(43) Date of publication of application: **15.03.2006**
(21) Application number: 04381035.7
(22) Date of filing: 14.09.2004
(51) Int. Cl.: B60J 7/00

(54) **Sunshade with blades for vehicle roofs**

(71) Applicant: GRUPO ANTOLIN-INGENIERIA, S.A., 09007 Burgos (ES)
(72) Inventor: Santaolalla Gil, Joaquin, 09003 Burgos (ES); Gonzales Pérez, Jorge M., 09001 Burgos (ES)
(74) Representative: Esteban Perez-Serrano, Maria Isabel

(57) **Abstract**

The present invention relates to a sunshade with blades (2) for roofs having a transparent element that allows covering this area to block sunlight. The invention characterises a special configuration of the blade store, as well as the means for engagement between adjacent blades (2) and between the first blade and its traction shoe, which configuration is the same for all blades, including the first one.

## Description

### OBJECT OF THE INVENTION

The present invention relates to a sunshade with blades for vehicle roofs that include a transparent element, regardless of whether the element is fixed with respect to the car body or is mobile.

This sunshade with blades allows covering the transparent element, preventing sunlight from passing through it. This invention characterises the attachment means both between adjacent blades and between the first blade and its traction shoe. The attachment between blades is based on the use of a carriage holder in a single part that integrates the anterior and posterior coupling means. Its configuration is identical for all blades, including the first one. The design of the blade store is configured according to the manner in which the blade attachment means are operated.

This device is provided with elements for transmitting the motion to the first blade by a push-pull cable or cables. Any of these solutions may or may not be motorised, giving rise to different embodiments for the invention.

### BACKGROUND OF THE INVENTION

The incorporation of transparent elements on the roof of a vehicle can be very attractive; however, the direct incidence of sun rays on its occupants can become a serious problem which may be alleviated by placing an intermediate barrier.

There are several solutions known in the state of the art meant to establish a barrier to sun rays when the vehicle roof has transparent elements.

German Patent DE 10218601 describes a shading system that uses individual curtains which differentiates the concealment of the two front-seat occupants and between the front-seat and rear-seat occupants. This differentiation gives rise to solutions for attaching the curtain rods based on a frame structure that does not include the guide rails.

A different solution is that disclosed and protected by U.S. Pat. No. 5,005,899. This patent describes a sunshade system that comprises a plurality of blades that can move horizontally and are distanced from each other. In addition to the blades there is a flexible curtain that completes the sunshade. The assembly is moved by traction by a toothed belt that requires a traction carriage on the first blade that is different from the other blades.

The curtain establishes the mechanical link between the blades and mainly allows a correct deployment when leaving the storage.

Also cited is the blade sunshade means described in Patent no. FR2718485 in which each blade has two shoes, one on each side, with a specific configuration to allow the correct deployment and later storage when the blades are retracted.

This profile is based on the use of front and rear wedge shapes combined with longitudinal guides in which enter lugs of the blade in the anterior position.

With this configuration, in both the extended and retracted position the blades are permanently joined.

This union makes the lug attachment base project under its own guide to reach the guide of the following blade.

Also known is French Patent no. FR2841186, which consists of a sunshade device for roofs with transparent elements in which the blades are all joined to each other by anchoring means consisting of two parts, an anterior part and a posterior part.

These anchoring means allow the blades to be joined when the slide in the lateral guides and become independent when they enter the store.

This storage is performed in an upwards sense, so that two support points are defined in the anterior anchoring: an upper one meant to rest on and slide along an oblique guide, favouring uncoupling in the collection operation; and a bottom support point that temporarily lifts the anterior part to allow the next blade to pass.

This configuration admits a variation in which one of the supports is internally concealed in an oblique guided segment.

In either case, the coupling means between the blades differentiate between the anterior parts and the posterior parts that make up the attachment means.

In turn, this French patent has a search report that cites German Utility Model no. DE9315575U. This citation is mainly because the latter model claims the operation method of the blades in which they remain coupled to each other while they move along the rails and their ability to uncouple when the blade is positioned in the store. The Utility Model has a wider field of art than the more recent French Patent, as it considers a storage according to this strategy, with the blades stacked upwards and downwards, the gravitational force being overcome by elastic means.

The present invention maintains the known approach of keeping the blades joined throughout their displacement along the rails and independent when they are stored. It discloses a design whose main novelty is a new design of the coupling means that consists of the use of a single part instead of several parts to allow its operation in both the anterior and posterior area with an also novel configuration that allows an anchoring between blades and their separation when they are retracted, while it does not require the use of a different part for the first blade on which traction is applied when opening and closing, as shown explicitly in Utility Model DE9315575U.

### DESCRIPTION OF THE INVENTION

The present invention consists of a sunshade device with blades for vehicle roofs that include a transparent element and require protection against sunlight .

Panoramic sunroofs in motor vehicles provide a large transparent surface that extends to the greater part of the vehicle roof. To prevent inconveniencing the occupants, sunshade devices are provided. Due to the large size of the transparent surface these systems must be retractable and storable in a small area of the roof.

The sunshade device according to the present invention consists of a set of blades that engage one another, can cover the area of the transparent element, can moving along guides and can be stacked in a store in the rear part of the vehicle.

Unlike known means, in this device the blades have traction and attachment means that are identical in the first and following blades. Not only are they identical for all blades, but unlike the means available in the state of the art the carriage holder consists of a single part, integrating the anterior and posterior attachment means. This reduces costs, as it reduces the number of parts in both the manufacture and assembly and management of vehicle part components.

As it is not necessary to distinguish the first blade from the rest, in the assembly the resulting difficulties are eliminated.

No less important is the technical implication of using a single part that integrates the anterior and posterior attachments. This constructive solution reduces the dimensional dispersion, as when several parts are used the presence of different attachment means for each part plus the dimensional dispersion of each part are factors that considerably increase the dimensional dispersion of the assembly.

In addition to the novelty implied by the use of a single part as a carriage support, an important advantage as regards the assembly should be remarked: in a design that uses several parts, the dimensions of these parts are substantially smaller that when a single part is used that must cover at least the width of the blade. In the latter case, corresponding to this invention, the part is more manageable.

Stacking in the store is obtained by the geometrical configuration of the carriage holders combined with the configuration of the store, the carriages and the shoes employed.

The store where the blades are stacked is placed in the rear part of the vehicle roof. The stacking is in a downward sense, so that the first blade to enter the store is placed in the lowest part.

This configuration allows placing the rails on which the blades run in the shade position as high as possible, so that the height reduction of the roof due to the presence of the sunshade device is minimal, and occurs mainly at the store. If on the contrary the blades entered and left the store at its bottom part, the rails would also start at this bottom part, so that there would be a loss in height beyond the store.

Considering the invention in greater detail, the sunshade device comprises a main frame that determines the structural body. While frames known in the state of the art consist of several parts, this frame can consist of a single part or several.

It has at least two lateral rails plus front and rear crossbars. On the rear, the presence of two crossbars, a posterior one and an intermediate one, allows attaching the blade store, although in certain cases in which the roof lining is very stiff the intermediate crossbar can be discarded.

The blade store comprises two parts, one on either side in a symmetrical configuration, meant to receive the guide means for the blade ends to guide them in the stacking process and house the stack thereby made.

The blades may be made from a single injected part or from several sheets with reinforcements, plus the guide means on the lateral ends according to the direction of motion of the blades.

The guide means consist of shoes that slide in guides along the lateral end rails.

The shoes are parts that are attached to a carriage, which is the support part provided in this end support of the blade.

In turn, the carriage must be attached to a carriage holder, which is a unique part in this invention, and which includes the anchoring points for attachment to the blade. In addition, the carriage holder is the part provided with engagement means between consecutive blades.

When the blade is injected, the carriage holder can be integrated on the ends of the blades so that its configuration is obtained in the same injection. In this particular case the carriage holder is still considered to be a unique part, wherein the carriage holder of either side of the blade are a single part, and the above-described advantages are still obtained.

The engagement means consist of an upper flange of the carriage holder on its front part, plus a U-shaped element or attachment on its rear part.

Both the front flange and the rear attachment have oblique surfaces to create a vertical wedge force, as will be described below.

It has been mentioned that stacking is performed in a downward sense, the blades descending as they enter the store. The lower part of the store has a spring that pushes the set of blades upwards, leaving its top part aligned with the store outlet rails. Just before the top blade exits completely it will engage the blade immediately under it. The latter tends to rise and therefore inserts the front flange of its carriage holder in the rear U-shaped attachment that is about to leave the store. After the blades engage the newly engaged blade is pulled outwards, this process being repeated for every blade.

During the entry process, when the blade reaches the rear base of the store its motion is hindered. The following blade continues to press on the union between the blades as it tries to enter the store, but as the store rails for the shoes and the faces of the attachment that engage the blade that has already entered are oblique, a vertical wedging force is applied that overcomes the resistance of the bottom spring, so that the blades already inside fall a height equivalent to one blade.

This leaves space for the next blade to enter. When all the blades are inside the store they will be disengaged from each other.

The displacement of the assembly as a whole is achieved by driving the first blade. This drive is achieved by a U-shaped traction shoe that embraces and pushes in one direction or another an anterior spring of the first blade placed on the side of the spring to engage the adjacent blade. It is stressed that with this method there is no need for the first blade to have a different configuration. This traction flange is present in all blades, but it is only used in the first one.

The drive is obtained by a push-pull cable or cable. Both provide a safe transmission without play.

In the push-pull cable transmission, an engine with reduction gears drives the displacement of a push-pull cable resting on its outer helical thread to make the push-pull cable act as a flexible rack.

With this drive method, the traction shoe is fixed on the end of the push-pull cable. Optionally, the shoe can be manufactured by overmoulding on the rope itself.

In the cable transmission it is necessary to establish the means for displacement in either sense. This displacement is performed by two cables, one for pulling in each sense.

With this configuration pulleys are used to change the cable direction. The traction shoe includes in this case a spring at the junction of one of the two ends of the cable that reach it, to guarantee tension in all positions along the rail and absorb any slack.

In both cases the drive can be manual instead of with a reduction motor.

### DESCRIPTION OF THE DRAWINGS

To present descriptive memory is completed by a set of drawings that illustrate the preferred example and in no case limit the invention.
Figure 1 shows a general perspective view of an embodiment of the sunshade device, showing the frame, the lateral and transverse rails and the store, as well as the extended blades with the store empty.
Figures 2 shows a plan view of an example of embodiment of the frame for a configuration with an electrical drive with a push-pull cable.
Figure 3 shows two perspective views of the part placed on the end of the frame, one either side, to constitute the store in which the blades are stacked. The inner area shows the shoes of three blades.
Figure 4 shows an exploded perspective view of a detail of an end of a blade, showing an exploded view of the parts of the carriage holder, carriages and shoes.
Figure 5 shows a perspective view of the anterior end of the carriage holder.
Figure 6 shows a perspective view of the posterior end of the carriage holder.
Figures 7a and 7b are enlarged perspective views of the inlet area for the carriage holders with the carriages and shoes in the part that constitutes the store, showing the mode of engagement between blades.
Figure 8 is section view of the rail with a show for an embodiment example with a drive based on an electrical drive and a push-pull cable.
Figure 9 is an exploded perspective view of the drive means in an embodiment of the device based on a push-pull cable with manual drive.
Figure 10 is an exploded perspective view of the anterior end of the first blade at its union to the shoe driven by the push-pull cable that allows displacing the first blade and, by traction, the remaining ones.
Figure 11 is an exploded perspective view of the traction means in a device that make use of a manually-driven cable wherein some of the elements, such as the side parts of the blade store or the traction show are schematically represented.

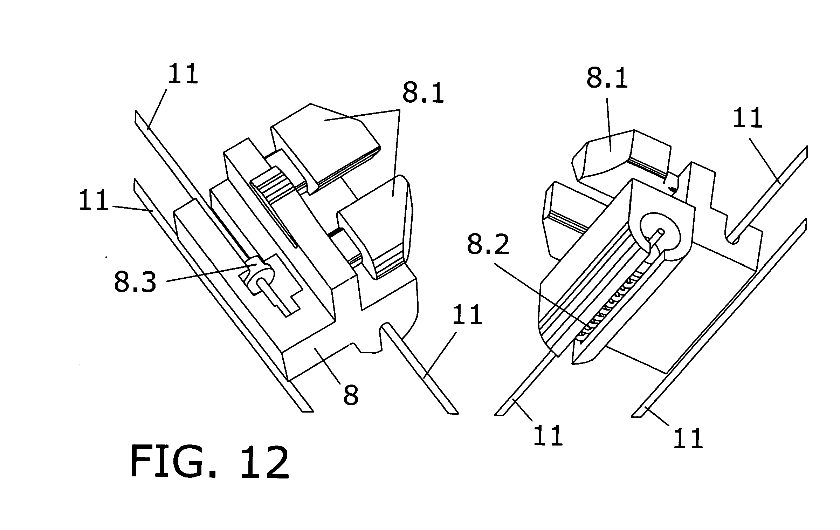

Figure 12 is a double perspective of the traction shoe for a device with an electrical and cable drive mechanism.
Figure 13 is a section view of the rail with the traction shoe for the example of figure 12.

### DETAILED DESCRIPTION OF SEVERAL EMBODIMENTS OF THE INVENTION

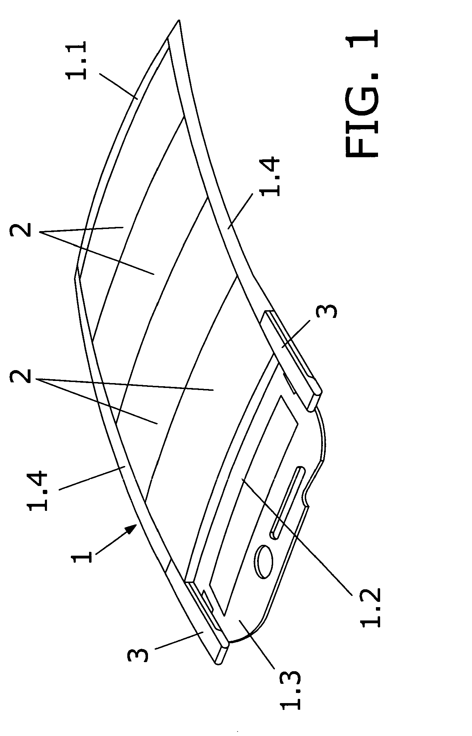

Figure 1 shows a general view of an example of embodiment for the sunshade device for protection from sunlight passing through the transparent element of a vehicle roof.

This view differentiates the structure constituted by the frame (1) and the blades (2) that establish a barrier against the sun rays.

The sides of the frame (1) are constituted by rails (1.4) that allow a longitudinal displacement of the blades (2). These rails (1.4) run between an anterior crossbar (1.1) and an intermediate crossbar (1.2) near the posterior part.

A space is left between the intermediate crossbar (1.2) and the posterior crossbar (1.3) that is used to store the stack of blades (2) when these are collected.

The store is mainly constituted by two symmetrical parts (3) whose shape allows the inlet and outlet of the blades (2), producing the correct stacking during the inlet and collaborating with the engagement between the blades (2) during the outlet. The number of blades (2) can be 1, 2 or 3, or as many as deemed necessary; it is possible for part or all of them to be extracted, to cover the transparent area entirely or partially.

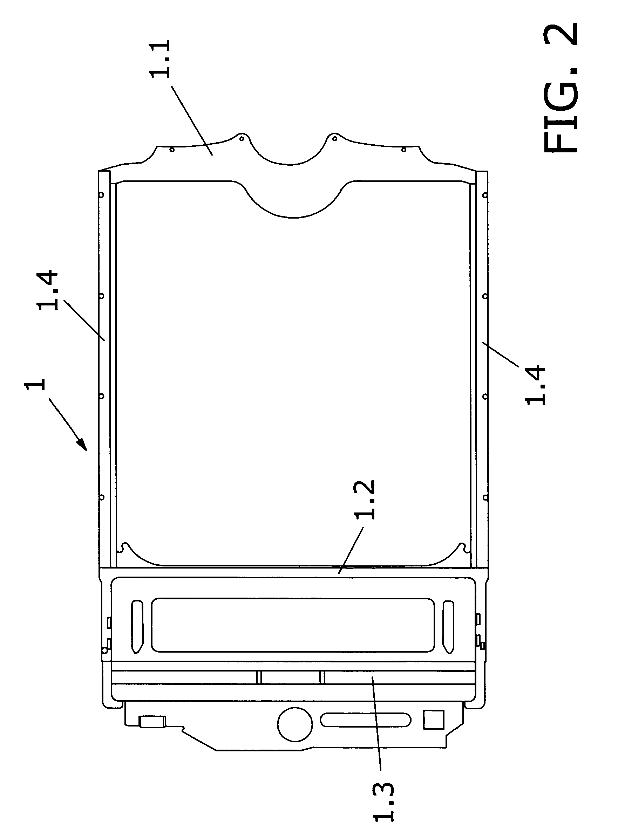

Figure 2 is a plan view of an example of a frame (1) designed for an electrical device that uses push-pull cables as a traction means.

The frame (1) consists of several parts: the anterior crossbar (1.1), the rails (1.4), the intermediate crossbar (1.2) and the posterior crossbar (1.3) that in turn can be made from one or two parts; however, the same frame (1) can be made by injection in a single part.

The anterior or posterior part of the frame (1), corresponding to the anterior or posterior crossbars (1.3), houses the manual or electric drive means that will transmit either by cables (11) or push-pull cables (7) the motion to the blades (2) along the lateral rails (1.4).

Therefore, depending on the drive means for the blades (2) and on the traction mode, this is, the mode of transmission of the movement from its generation to the blades (2), the systems can be classified as:
- Electrical device with push-pull cable (7)
- Manual device with push-pull cable (7)
- Electrical device with cable (11)
- Manual device with cable (11).

In this invention the blades (2) are joined to each other only when they are out of the store. Inside it they are disengaged and stacked. The transition between these situations takes place during the outlet, this stage characterising the mode of establishing the engagement between the blades (2). This engagement is due to a special configuration of both the lateral parts (3) of the store and the carriage holders (5).

As regards the global configuration, the store establishes a downward stacking. This is, the first blade (2) that enters will be placed on the bottom and the first blade (2) to exit will be the last one that entered.

This arrangement places the rails (1.4) on the highest part, next to the roof, thereby reducing the space required for the sunshade device. If the blades (2) were to run out of the bottom part of the store, this lower height would extend beyond the store, reducing the inner height of the vehicle. Therefore, the arrangement of the invention optimises the space used.

The stack of blades (2) in the store is constantly pressed upwards by a spring (13) on the bottom that emerges through two lower grooves (3.3) of the lateral part (3) of the store. This spring (13) allows the top blade (2) in the stack to be aligned with the rails (1.4), even if there is only one blade (2) remains in it.

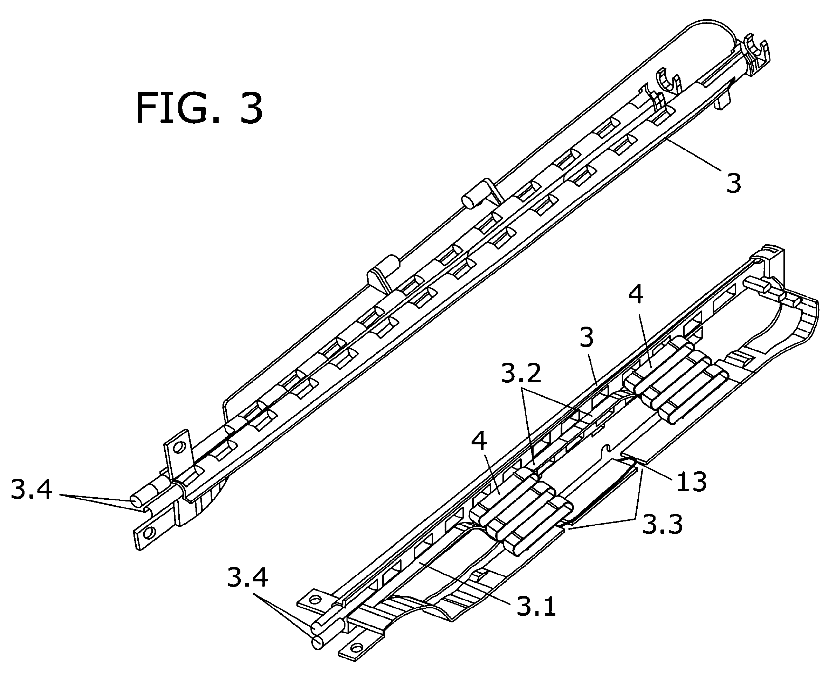

The lateral part (3) of the store, as shown in figure 3, has a main guide (3.1) aligned with the rail (1.4) that feeds the stack. This guide (3.1) is prolonged in its central area as a guide segment (3.2) that leaves two housings on either side. These housings receive the two shoes (4) provided on each end of the blade (2). When a blade (2) is already stored, its shoes (4) determine a continuity of the rails (3.1, 3.2) of the lateral part (3) of the store, so that when the blade (2) enters its first shoe (4) slides along the first segment of the guide (3.1), then on the shoe (4) of the lower blade (2) and lastly on the middle guide segment (3.2) until it reaches the end of the store.

When the end of the store is reached the blade (2) has its shoes (4) positioned above the shoes of the bottom blade (2) and in the cavities that allow it to descend. This descent takes place compressing the spring (13), leaving space for the next blade (2).

The engagement and release method between the blades (2) occurs in the store inlet due to the configuration of the anterior and posterior elements of the carriage holders (5) configured as a single part. This single part configuration of the carriage holders (5) allows reducing the dimensional dispersion resulting after each part is manufactured and the assembly is mounted, improving the reliability of operation in addition to the advantages mentioned in the description.

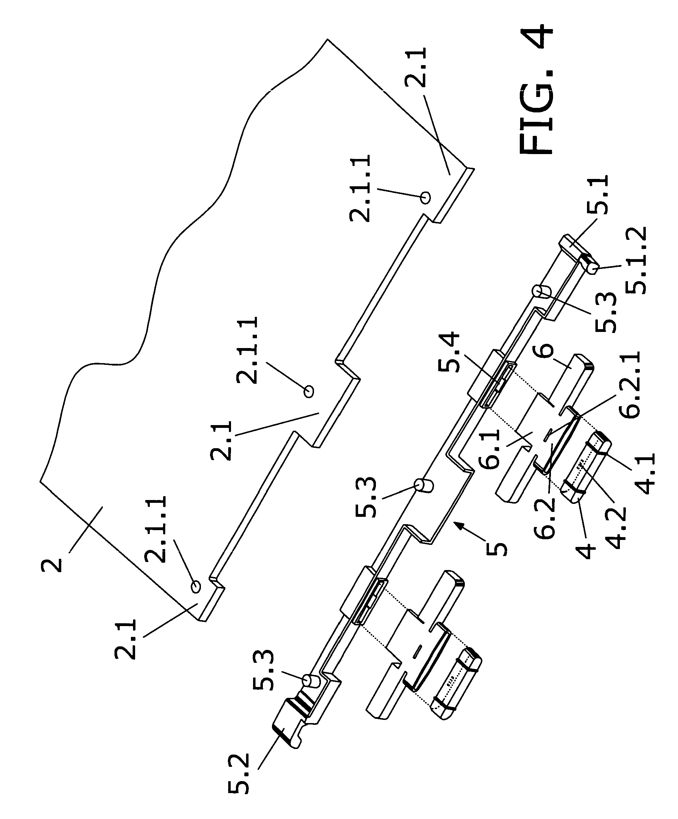

Figure 4 shows the end of the blade (2) when it comprises a central element or body and a carriage holder (5) with the parts configuring the support and engagement means.

The end of the blade (2) shows a profile with three extensions (2.1) that enter the housings provided in the part referred to until now as the carriage holder (5). This part (5) is responsible for holding the carriages (6), which in turn hold the shoes (4) and with their ends establish the engagement of the blades (2) as they exit.

The housings of the carriage holder (5) have a projection (5.3) for each orifice (2.1.1) present in the extensions (2.1) of the blade (2) that rivets the carriage holder (5) to the blade (2).

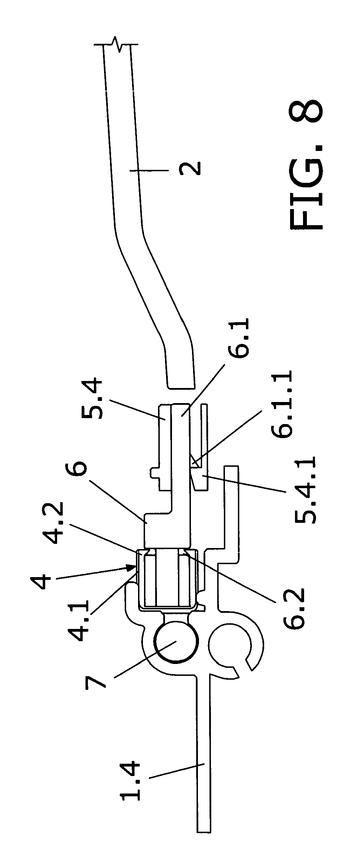

Between the housings of the carriage holder (5) are receptacles (5.4) for the carriages (6). The carriages (6) have an elongated body with a centred flap (6.1) that enters the receptacles (5.4) of the carriage holders, establishing the attachment by clips (6.1.1). Figure 8 shows an enlarged sectional view of the union.

On the other side of the flap (6.1) is a flange (6.2) housed in side the shoe (4). At the root of this flange (6.2) is an orifice (6.2.1) that receives a wedge-shaped element (4.2) located inside the shoe (4) to prevent the latter from falling out.

To aid its sliding by friction the shoe (4) has ribs (4.1) that reduce its contact surface.

Two types of blade can be used: composite or injected.

The composite blade (2) used in this example comprises the following elements (which we shall only list):
- Outer lining. This is a layer with the desired finish for the outside of the vehicle.
- Reinforcements. These are slats used to stiffen the blade (2). They are provided on both sides of the body of the blade (2). They can be made of steel plate.
- Body. This is the central sheet in the blade (2) that provides its stiffness, constituting part of its structure together with the reinforcements, as well as supporting other elements.
- Inner lining. This is a sheet that can be seen from the inside of the vehicle, with the desired finish.

On its part, the injected blade (2) integrates the carriage holder (5), reducing the number of parts composing the blade (2) and the part meant to receive the carriages (6) and their shoe (4). Likewise, the injected blade can integrate the outer and inner linings and the reinforcements, to define a single central body in which the carriages (6) are mounted.

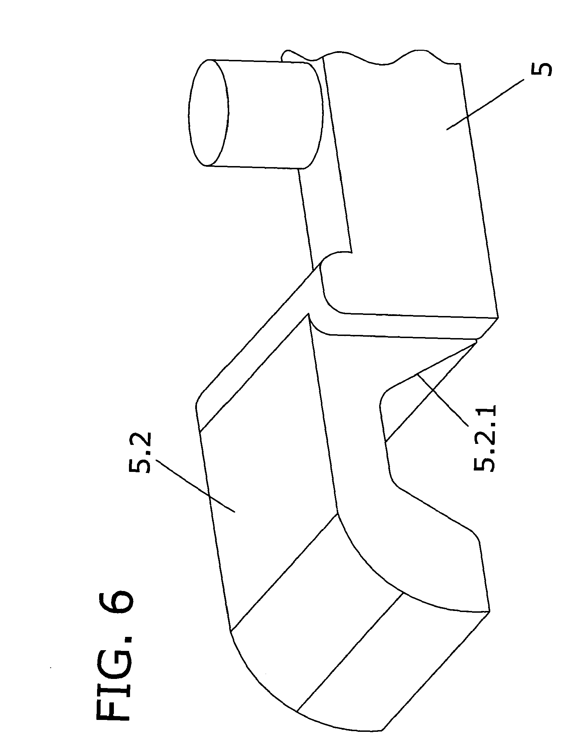

Figure 6 is an enlarged inset of the rear end of the carriage holder (5) showing a U-shaped element (5.2) with oblique inner faces, particularly the lateral internal face (5.2.1).

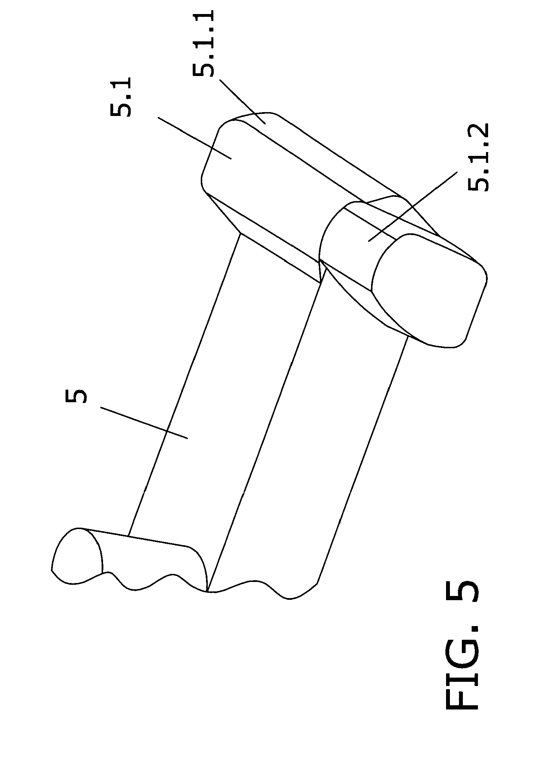

The inset of figure 5 corresponds to the anterior end of the carriage holder (5). A rising flange (5.1) is provided on this end meant to be housed under the U-shaped element (5.2) to engage a blade (2) to its adjacent blade at the time it leaves the store.

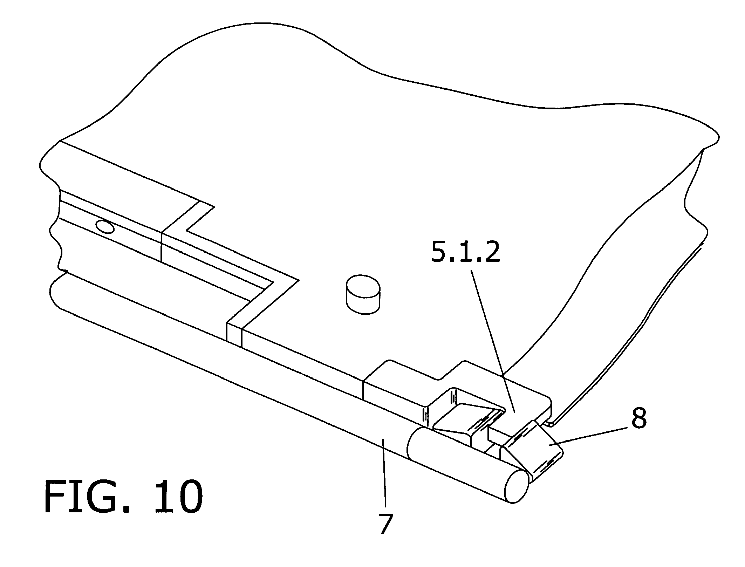

Figure 5 also shows that the flange (5.1) is prolonged laterally as another flange (5.1.2). This second flange (5.1.2) allows pulling the blade (2) when it is in the first position by a U-shaped traction shoe (8), as shown in figure 10. The remaining blades (2) have this second flange (5.1.2) but do not use it, so that there is a single configuration of the blades (2), and specifically of the carriage holder (5), regardless of whether it is the first blade (2) or a following one.

The blades (2) engage one another at their outlet. The flange (5.1) in an anterior position of the blade (2) about to exit, which rises by the action of the bottom spring (13), engages the U-shaped element in a posterior position of the blade (2) that is almost entirely out.

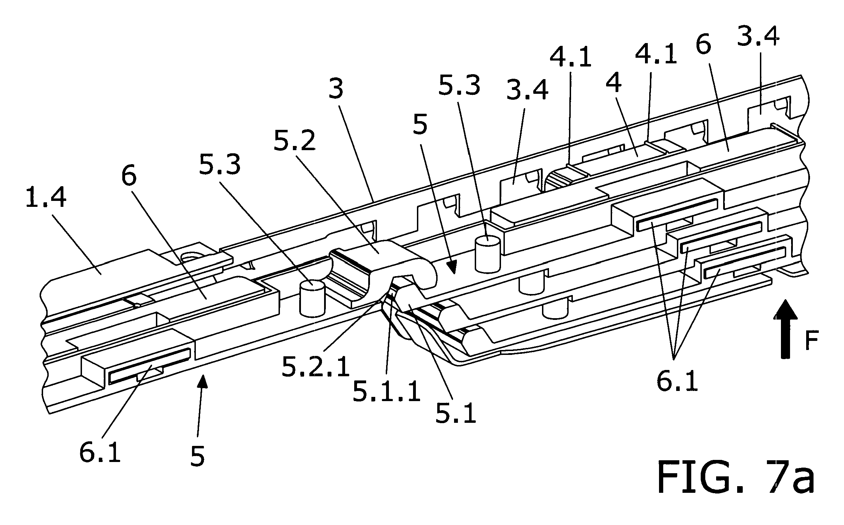

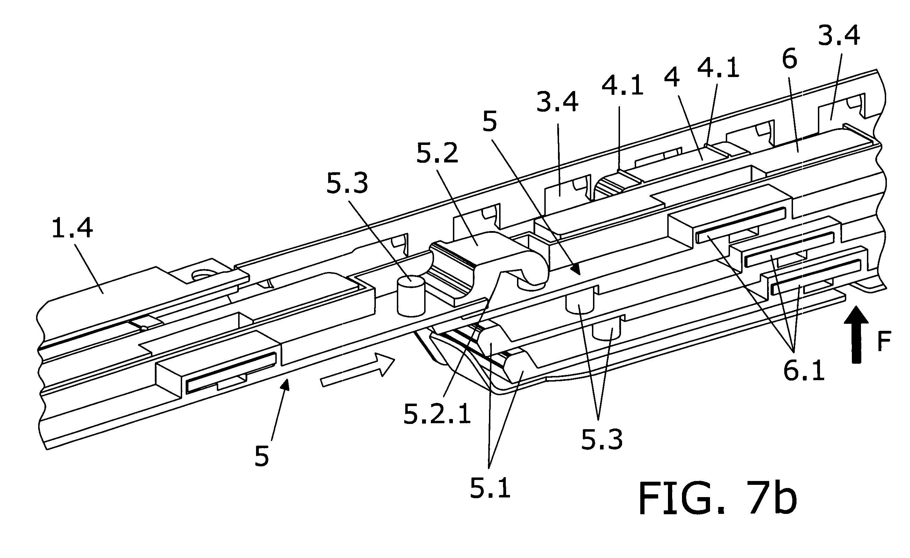

On the contrary, figures 7a and 7b show a sequence of two moments during the entry of the upper blade (2) with three blades (2) already stored. It should be mentioned that for the sake of clarity the blades (2) are not represented, only the carriage holders (5), carriages (6) and shoes (4).

In this case, as shown in figure 7a, the presence of an oblique plane or bevel (5.1.1) in the flange (5.1) of the blade (2) that is already inside, due to the horizontal impulse of the blade (2) that is arriving along the rail (1.4), results in a vertical force component that overcomes the resistance F of the bottom spring (13).

The result is that the blades (2) already in the store descend to leave space for the blade (2) that is entering. This descent is possible because all the shoes (4) of the blades (2) that are already inside are in the spaces provided between the segments of the rails (3.1, 3.2) of the lateral part (3) of the store. These spaces have an oblique directrix, which together with the configuration of the rear supports of the lateral part (3) of the store favours the wedging of the blades (2) and thereby their position inside the store.

With respect to the traction driving the blades (2) in or out of the store, two possible embodiments are described: by push-pull cable (7) or by cable (11).

### Push-pull cable traction

The push-pull cable (7) is simply a cable with a helical surface element, so that it acts as a flexible screw that adapts to the configuration of the housing in which it is placed. This housing can be a sheath that guides it, or it can be a cavity in the profile of the rail (1.4) prolonged along the rear part of the lateral part (3) of the store by ducts (3.4) integrated in it. This is the case, using a push-pull cable (7), shown in the sectional view of figure (8), which represents the section of the rail (1.4) with the push-pull cable (7) inside a housing that allows its access from the side of the blade (2). This access allows the traction shoe (8), not shown in this section, to move together with the end of the push-pull cable which is in turn moved as a flexible rack by the presence of the manual or motorised drive means. In this case the shoe (8) can be injected directly on the end of the push-pull cable (7).

The same section of figure 8 shows the clip means (4.2) between the shoe (4) and the space (6.2.1) provided in the carriage (6) and the clip means (6..1.1) between the carriage (6) and ledge (5.4.1) of the carriage holder (5). It is this latter part that is joined to the blade (2), which extends to the right as shown.

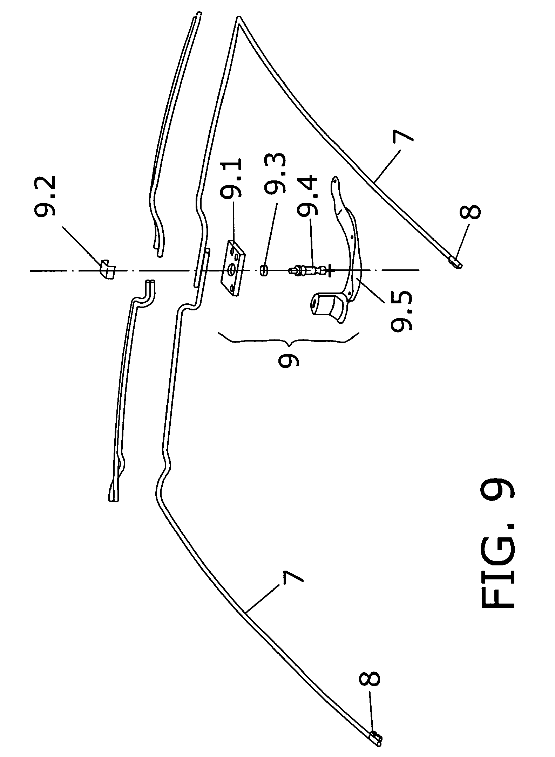

Figure 9 is an exploded view of the device according to this preferred embodiment, showing only the traction means:
- Two push-pull cables (7), one on each side, to pull the ends of the first blade (2) by corresponding traction shoes (8)
- On the ends of the push-pull cables (7) that converge on the side of the frame (1) is provided a set (9) of elements that turn the push-pull cables (7), the support (9.1) or base element of the actuator, the gear (9.3) as an element for transmitting the motion to the push-pull cable (7), the shaft-handle (9.4) or element on which the rotation motion is applied, the counterplate (9.2) that acts as a support element for the actuation system, and the cover (9.5) that is simply an ornamental and structural element supporting the actuation loads generated, in this case manually, in the area of the front crossbar (1.3) of the frame (1).

If the drive is provided by a reducer motor (12), this motor will be mounted on the rear part, not on the front part where the manual drive handle is mounted. In this case the drive couple will be provided by the motor (12), instead of the handle.

### Cable traction

Traction by a cable (11) has its specific characteristics, as although the push-pull cable (7) allows to apply a forward or rearward impulse simply by inverting the rotation sense of the drive means, the cable (11) can only be pulled.

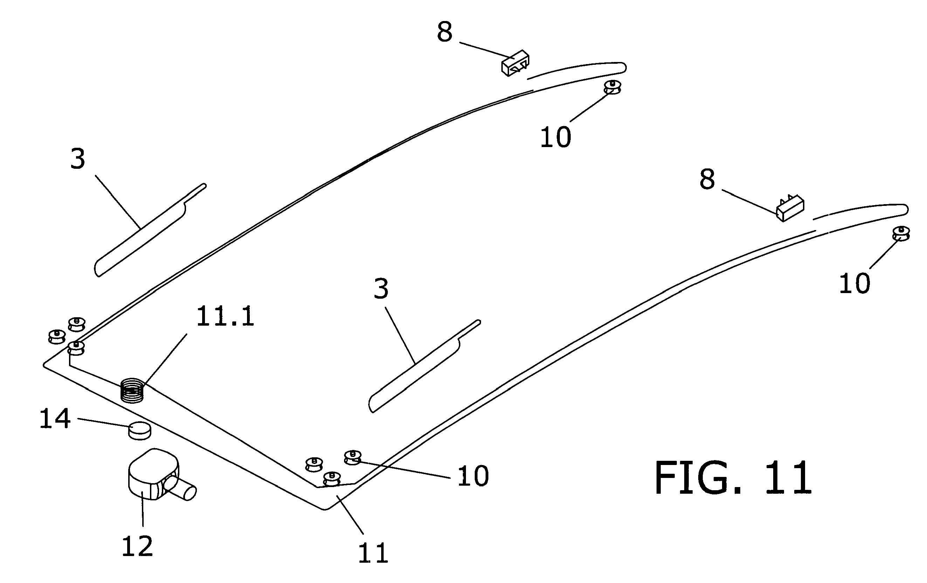

This means that two cables (11) are required, each one pulling in one direction. The arrangement used employs a loop as shown in figure 11 that extends on either side of the blades (2) where each arm shown coincides with each of the rails (1.4).

This cable (11) is provided with a pulley (10) at each point where the direction must be changed.

The drive is produced at a point of the cable where a winding (11.1) is defined that in its operational position (note that the representation is an exploded view) corresponds to the perimeter of a drum (14) on which the motor (12) acts applying its drive couple.

This same figure shows schematically that parts (3) of the sides of the store to facilitate the orientation and relative position of all the elements shown.

In this embodiment of the invention, the ends of the cable (11) arranged as a closed loop are joined in the traction shoe (8) to which they are joined.

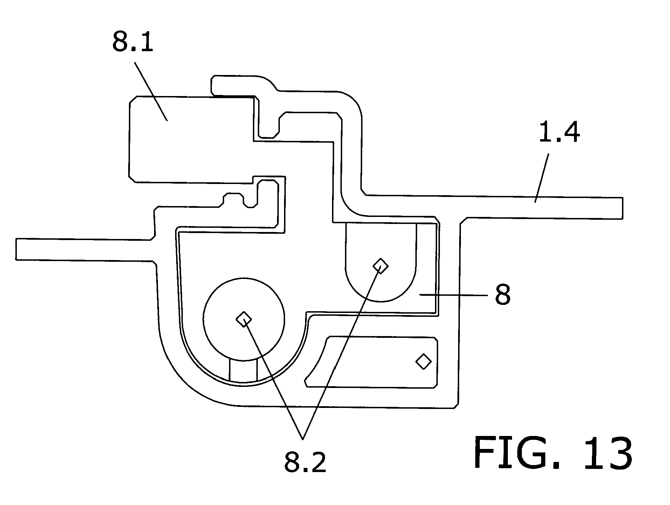

The traction shoe (8) designed for this configuration is shown in figure 8 by two perspective views and in figure 13 by a section of the rail (1.4) in which it is housed.

As the cable (11) must remain taut at all times, to prevent the effect of any slack a tension spring (8.2) has been provided on one of the ends joined to the shoe (8). The other end of the cable (11) simply uses an attachment lug (8.3). This configuration means that the U-shaped clip (8.1) is placed over the means of attachment of the ends of the cable (11).

When the cables (11) pass through curved segments and their tension must be controlled, sheaths are used to define their path.

The essence of this invention is not altered by variations of the materials, shape, size and arrangement of the component elements, described here in a non-limiting manner that should allow an expert in the field to reproduce the invention.

## Claims

1. Sunshade with blades for vehicle roofs consisting of:
• a support frame (1) for the device, consisting of two lateral rails (1.4) that guide and allow sliding of the shoes (4) on the ends of the blades (2), and anterior and posterior crossbars;
• a blade stacking store, disposed on the rear part of the frame, with an upper outlet so that the blades (2) stacked and stored will be disengaged from each other, and the blades (2) that have already moved out are engaged, their union/release produced by an engagement when they leave/enter the store;
• blades (2) on the ends of which are carriage holders (5) with means for holding carriages (6) that in turn support sliding shoes (4);
• and traction means that act on the first blade (2), which are actuated either manually or by a motor (12), acting through a push-pull cable (7) or a cable (11);
**characterised in that** the carriage holder (5) is constructed as a single part with an identical configuration in the first traction blade (2) and in the following blades, simultaneously provided with the anterior and posterior engagement means and the traction means for when it belongs to the first blade (2).

2. Sunshade with blades for vehicle roofs according to claim 1, **characterised in that** the carriage holder (5) has insets with projections (5.3) for attachment to the blade (2) by riveting.

3. Sunshade with blades for vehicle roofs according to claim 1, **characterised in that** the carriage holder (5) has receptacles (5.4) to house the carriages (6)

4. Sunshade with blades for vehicle roofs according to claim 3, **characterised in that** the receptacles (5.4) have an inner ledge for retaining the carriage (6).

5. Sunshade with blades for vehicle roofs according to claim 1, **characterised in that** the rear end of the carriage holder (5) uses a U-shaped hook (5.2) and an anterior flange (5.1) meant to insert one (5.1) in the other (5.2) between adjacent carriage holders (5).

6. Sunshade with blades for vehicle roofs according to claim 5, **characterised in that** at least the anterior inner face (5.2.1) of the hook (5.2) is oblique, as well as the end face (5.1.1) of the anterior flange (5.1) housed in the hook (5.2).

7. Sunshade with blades for vehicle roofs according to claim 6, **characterised in that** the two internal lateral faces of the hook (5.2) and the two faces of the anterior flange (5.1) meant to enter in the hook (5.2) are oblique.

8. Sunshade with blades for vehicle roofs according to claim 1, **characterised in that** the carriage holder (5) is integrated in the blade (2) itself.

9. Sunshade with blades for vehicle roofs according to claim 1, **characterised in that** the carriage (6) consists of a main body with a flap (6.1) that inserts in the carriage holder (5), and on the opposite end a support flange (6.2) in which enters the sliding shoe (4).

10. Sunshade with blades for vehicle roofs according to claim 9, **characterised in that** the flap (6.1) has a clipping means (6.1.1) for attaching the carriage holder (5).

11. Sunshade with blades for vehicle roofs according to claim 9, **characterised in that** the flange (6.2) in which is inserted the sliding shoe (4) has a space (6.2.1) for attaching the shoe (4) by clipping (4.2).

12. Sunshade with blades for vehicle roofs according to claim 1, **characterised in that** the sliding shoe (4) has external ribs (4.1) for reducing friction.

13. Sunshade with blades for vehicle roofs according to claim 1, **characterised in that** the frame (1) comprises a single part.

14. Sunshade with blades for vehicle roofs according to claim 1, **characterised in that** the frame(1) comprises different parts: a front crossbar (1.1), two lateral rails (1.4), one on each side, an intermediate crossbar (1.2) and a rear or posterior crossbar (1.3).

15. Sunshade with blades for vehicle roofs according to claim 14, **characterised in that** the intermediate (1.2) and rear (1.3) crossbars conform a single part and constitute the support structure of the blade store.

16. Sunshade with blades for vehicle roofs according to claim 1, **characterised in that** the lateral part (3) of the store has an upper access for the sliding shoes (4) of the blades (2) that extends as a first guide segment (3.1), having a second guide segment (3.2) at a distance from the first one (3.1) so that between the guide segments (3.1, 3.2) and on the rear part of the second guide segment (3.2) there are spaces to house the shoes (4) of the stacked blades (2).

17. Sunshade . with blades for vehicle roofs according to claim 16, **characterised in that** the spaces of the lateral part (3) of the store in which the shoes (4) are stacked have an oblique arrangement oriented towards the outlet.

18. Sunshade with blades for vehicle roofs according to claim 16, **characterised in that** the lateral part of the store has two grooves (3.3) on its bottom to allow passage of the rods of a spring (13) meant to push upward the stack of blades (2).

19. Sunshade with blades for vehicle roofs according to claim 16, **characterised in that** the lateral part (3) of the store is provided on its anterior part with ducts (3.4) to allow passage of the cables (11) or push-pull cable (7) for driving the first blade (2).

20. Sunshade with blades for vehicle roofs according to claim 1, **characterised in that** the actuation is by a push-pull cable (7).

21. Sunshade with blades for vehicle roofs according to claim 20, **characterised in that** the traction shoe (8) is injected on the end of the push-pull cable (7).

22. Sunshade with blades for vehicle roofs according to claim 1, **characterised in that** the actuation is by cables (11).

23. Sunshade with blades for vehicle roofs according to claim 22, **characterised in that** the traction shoe (8) includes a housing for a spring (8.2) that maintains the cables taut.
